(19) Europäisches Patentamt / European Patent Office / Office européen des brevets

(11) **EP 3 021 506 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(51) Int Cl.:
*H04J 14/02* (2006.01)     *G02B 6/12* (2006.01)
*G02B 6/293* (2006.01)

(21) Anmeldenummer: **14193433.1**

(22) Anmeldetag: **17.11.2014**

(54) **Verfahren und Vorrichtung zur transparenten Verschaltung verschiedener DWDM Systeme durch NxN AWGs**

Method and device for transparent switching of different DWDM systems with NxN AWGs

Procédé et dispositif de commutation transparente de différents systèmes DWDM au moyen de réseaux de guide d'onde (AWG) NxN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.05.2016 Patentblatt 2016/20**

(73) Patentinhaber: **Deutsche Telekom AG**
**53113 Bonn (DE)**

(72) Erfinder: **Braun, Ralf-Peter**
**12305 Berlin (DE)**

(74) Vertreter: **Vossius & Partner**
**Patentanwälte Rechtsanwälte mbB**
**Siebertstrasse 3**
**81675 München (DE)**

(56) Entgegenhaltungen:
**EP-A1- 1 324 523     WO-A1-2013/164044**

- HIROMU TOBA ET AL: "An Optical FDM-Based Self-Healing Ring Network Employing Arrayed Waveguide Grating Filters and EDFA's with Level Equalizers", IEEE JOURNAL ON SELECTED AREAS IN COMMUNICATIONS, IEEE SERVICE CENTER, PISCATAWAY, US, Bd. 14, Nr. 5, 1. Juni 1996 (1996-06-01), XP011054510, ISSN: 0733-8716

- HILL A M ET AL: "A scalable and switchless optical network structure, employing a single 32 x 32 free-space grating multiplexer", IEEE PHOTONICS TECHNOLOGY LETTERS, IEEE SERVICE CENTER, PISCATAWAY, NJ, US, Bd. 8, Nr. 4, 1. April 1996 (1996-04-01), Seiten 569-571, XP011425032, ISSN: 1041-1135, DOI: 10.1109/68.491229

- POLITI C ET AL: "Novel wavelength/wavehand cross connect architetture based on optical wavelength converters and a passive wavelength router", LEOS 2003. 16TH. ANNUAL MEETING OF THE IEEE LASERS & ELECTRO-OPTICS SOCIETY. TUCSON, AZ, OCT. 27 - 28, 2003; [ANNUAL MEETING OF THE IEEE LASERS AND ELECTRO-OPTICS SOCIETY], NEW YORK, NY : IEEE, US, Bd. 1, 26. Oktober 2003 (2003-10-26), Seiten 140-141, XP010676417, DOI: 10.1109/LEOS.2003.1251640 ISBN: 978-0-7803-7888-9

- ZHU YANG ET AL: "32x10Gb/s SDH Wavelength Division Multiplex system technology and project", SPIE, PO BOX 10 BELLINGHAM WA 98227-0010 USA, 2003, Seiten 653-662, XP040253966,

- TESHIMA M ET AL: "Optical carrier supply module applicable to over 100 super-dense wdm systems of 1000 channels", OPTICAL COMMUNICATION, 2001. ECOC '01. 27TH EUROPEAN CONFERENCE ON SEPT. 30 - OCT. 4, 2001, PISCATAWAY, NJ, USA,IEEE, Bd. 1, 30. September 2001 (2001-09-30), Seiten 98-99, XP010582833, ISBN: 978-0-7803-6705-0

**Beschreibung**

**Technisches Gebiet**

Die vorliegende Erfindung betrifft ein System sowie ein Verfahren zur transparenten Verschaltung verschiedener DWDM Systeme, insbesondere auch von DWDM Systemen unterschiedlichen Hersteller, durch NxN AWGs.

**Stand der Technik**

In optischen Transportnetzen, entsprechend dem ITU-T G.709 Standard "Optical Transport Network (OTN)" (http://www.itu.int/rec/T-REC-G.709/) werden optische Multiplex Signale mit optischen Frequenzen bzw. Wellenlängen entsprechend dem ITU-T G.694.1 Standard, "DWDM frequency grid" (http://www.itu.int/rec/T-REC-G.694.1/) übertragen (Dichte Wellenlängen-Multiplex; engl. Dense Wavelength Division Multiplex, DWDM). Das optische Transportnetz (OTN) ist eine von der ITU im Standard G.709 standardisierte Technologie für ein Telekommunikationsnetz, mit dem Netzbetreiber mittels eines Transportdienstes Nutzdaten übertragen. Die Architektur des optischen Transportnetzes kann generell in drei optische Schichten eingeteilt werden. Die unterste Schicht, die Optical Transmission Section (OTS), beschreibt die optische Faserstrecke zwischen zwei optischen Systemkomponenten. Das können optische Verstärker (OA), optische Add-Drop-Multiplexer (OADM) oder optische Kreuzverteiler (OXC) sein. Die darüber liegende Schicht, die Optical Multiplex Section (OMS), umfasst die Multiplexfunktionen einer DWDM-Verbindung zwischen zwei Netzwerkknoten. Die oberste Schicht, der Optical Channel Layer (OCh), beschreibt den optischen Kanal zwischen zwei optischen Endpunkten. In einem solchen Kanal können beliebige Nutzdaten übertragen werden. Standardisierte Adaptionsfunktionen erlauben es, Ethernet- und IP-Rahmen ohne vorherige PDH- oder SDH-Rahmung zu übertragen.

Dabei können derzeitig verfügbare DWDM Systeme mit 96 DWDM Kanälen mit 50 GHz Kanalbandbreite pro Kanal 100 Gbit/s Signale über > 3000 km im optischen C-Band (Center-Band) übertragen (http://www.cisco.com/en/US/prod/collateral/optical/ps5724/ps2006/data_sheet_c78-713296.html).

Das C-Band ist dabei im Wesentlichen durch die optische Verstärkungsbandbreite der optischen Erbium dotierten Faser Verstärker (Erbium doped fiber amplifier, EFDA) bestimmt. Diese DWDM Systeme können neben den optischen Band- und Kanal- Multiplexern und Demultiplexern und den optischen Verstärker auch re-konfigurierbare optische Add-Drop-Multiplexer (ROADM) enthalten, wodurch umfangreiche und komplexe vermaschte Glasfasernetze aufgebaut werden können.

Dabei werden bisher aber jeweils nur DWDM Systeme eines Herstellers für den Aufbau eines optischen Netzes herangezogen, da die verschiedenen komplexen Funktionen und Regelvorgänge innerhalb des DWDM Netzes über Hersteller-reine DWDM Technologie mit entsprechenden Management Systemen gesteuert werden müssen, die meist Hersteller spezifisch sind. Eine Zusammenschaltung verschiedener DWDM Systeme von unterschiedlichen Herstellern, d.h. die Zusammenschaltung verschiedener DWDM Systeme mit unterschiedlichen Management Systemen, ist bisher nicht vorgesehen.

Die international Anmeldung WO 2013/164044 vom selben Erfinder der vorliegenden Erfindung betrifft ein Verfahren und eine Vorrichtung bzw. ein System zum Aufbau und Betrieb eines vorzugsweise modularen, hochskalierbaren, sehr einfachen, kostengünstigen und nachhaltig transparenten, optisch geführten Netzes für große Netzwerkkapazitäten. Insbesondere wird dort ein Entkoppeln eines quasi-passiven Kernnetzes von den passiven und/oder aktiven Randfunktionalitäten in oder an den Netzknoten an der Kernnetzkante beschrieben.

Der Artikel mit dem Titel "An Optical FDM-Based Self-Healing Ring Network Employing Arrayed Waveguide Grating Filters and EDFA's with Level Equalizers" von Hiromu Tuba et al., IEEE Journal on Selected Areas in Communications, Bd. 14, Nr. 5, 1. Juni 1996, beschreibt ein OFDM (Optical Frequency Division Multiplexing) basierendes selbstheilendes unidirektionales Ringnetzwerk. Insbesondere werden Array-Wellenleitergitter-Add/Drop-Multiplexer (ADMs) und Erbium-dotierte Faserverstärker (EDFAs) mit Wellenleiterpegelentzerrern in entfernten Knoten verwendet.

Der Artikel mit dem Titel "A Scalable and Switchless Optical Network Structure, Employing a Single 32x32 Free-Space Grating Multiplexer" von Hill A. M. et al., IEEE Photonics Technology Letters, Bd. 8, Nr. 4, April 1996, Seiten 569-571 beschreibt die Verwendung eines einzelnen N×N-Wellenlängenmultiplexers zum optischen Verbinden von Anschlüssen der Ordnung $N^2$ ohne die Verwendung von Raumschaltern (daher "switchless").

Schließlich zielt die Patentanmeldung EP 1 324 523 darauf ab, ein optisches WDM-Kommunikationssystem bereitzustellen, das effizient optische Signale einer Vielzahl von Bitraten mit unterschiedlichen Wellenlängenabständen anordnen kann. Zu diesem Zweck ist beispielsweise ein Grundaufbau eines Demultiplexabschnitts mit einem Demultiplexer versehen, der WDM-Signallicht in 2m-Komponenten gemäß einer Mehrzahl von Wellenlängenbereichen demultiplext.

Es besteht somit ein Bedarf neue Verfahren bzw. Systeme für optische Transportnetze bereitzustellen, insbesondere um verschiedene DWDM Systeme mit verschiedenen Management Systemen zusammenzuschalten.

Mit den erfindungsgemäßen Systemen und Verfahren wird dieser Bedarf erfüllt. Die erfindungsgemäßen Systeme bzw. Verfahren erlauben die optisch transparente Zusammenschaltung verschiedene DWDM Systeme, insbesondere auch von verschiedenen Herstellern, wobei die einzelnen DWDM Systeme nach wie vor unabhängig voneinander weiter mit ihren Hersteller spezifischen Management Systemen separat gesteuert werden können und ihre entsprechenden Funktionalitäten dennoch beibehalten werden können.

**Zusammenfassung der Erfindung**

Das erfindungsgemäße Verfahren und System wird durch die unabhängigen Ansprüche definiert. Weitere bevorzugte Ausführungsformen der vorliegenden Erfindung sind in den abhängigen Ansprüchen definiert.

Gemäß einem ersten Aspekt betrifft die Erfindung ein System mit einem ersten DWDM (Dense Wavelength Division Multiplex) System und einem zweiten DWDM System die optisch transparent zusammengeschaltet sind. Das erste DWDM System weist einen ersten OLA, Optical Line Amplifier, zum Verstärken des zu übertragenden Signals auf, und das zweite DWDM System einen zweiten OLA zum Verstärken des zu übertragenden Signals auf. Dieser erste OLA des ersten DWDM Systems wird mit dem zweiten OLA des zweiten DWDM System über ein passives NxN AWG, Arrayed-Waveguide Grating, verbunden.

Um die Signale des ersten DWDM Systems über weite Strecken zu übertragen umfasst das erste DWDM Systems vorzugsweise mehrere OLAs. Das gleiche gilt vorzugsweise auch für das zweite DWDM System. Ein erster OLA bezeichnet erfindungsgemäß vorzugsweise einen beliebigen OLA in dem ersten DWDM System. Mit andere Worten, ein erster OLA bezeichnet einen OLA des ersten Systems. Entsprechend bezeichnet der zweite OLA einen OLA des zweiten Systems.

Insbesondere wird erfindungsgemäß für eine unidirektionale Signalübertragung vorzugsweise ein NxN AWG verwendet, und für eine bidirektional Signalübertragung werden vorzugsweise zwei NxN AWGs verwendet. Mit anderen Worten, vorzugsweise wird pro Übertragungsrichtung ein NxN AWG verwendet.

Ein OLA des ersten Systems weist einen ersten Signaleingang und einen ersten Signalausgang auf. Der OLA ist zudem derart konfiguriert, dass ein erster optischer Überwachungskanal OSC, optical supervisory channel, nach dem ersten Signaleingang von einem (ersten) Contentsignal ausgekoppelt wird. Der optische Überwachungskanal überträgt OSC Management Signale. Die ausgekoppelten OSC Management Signale werden in der OLA vorzugsweise in elektrische Signale umgewandelt und vorzugsweise als elektrische Signal innerhalb des OLA verarbeitet. Vorzugsweise werden die OSC Management Signale auch in einem ROADM (rekonfigurierbarer optischer Add-Drop-Multiplexer als Baugruppe in optischen Fernverkehrsnetzen) oder OXC (optischer Kreuzverteiler (engl.: Optical Crossconnect, OCC oder auch OXC) und im Line Terminal (Optische Endpunkte der optischen Verbindung) terminiert und verarbeitet.

Das ausgekoppelte Contentsignal wird vorzugsweise als optisches Signal beibehalten bzw. optisch vom OLA weitergeleitet. Das erste Contentsignal ist vorzugsweise ein DWDM Content Multiplex Signal, das beispielsweise 96 x 50 GHz Kanäle im C-Band umfasst. Diese Aufteilung ist ein Beispiel für das C-Band. Die Erfindung ist jedoch nicht darauf beschränkt und es können auch andere Signale vorliegen, z.B. 12 x 400 GHz Bänder, oder auch gemischte Signale. Im Beispiel mit dem 12x12 AWG werden 12 x 400 GHz Bänder im AWG verschaltet, bzw. aufgrund ihrer Wellenlängen transparent durchgeleitet. Ob pro Band 8 x 50 GHz oder 1 x 400 GHz oder 16 x 25 GHz Kanäle oder auch gemischte Kanäle (z.B. flex grid) vorliegen ist der optischen Funktion des AWGs egal. Vorzugsweise wird der OSC vor dem ersten Signalausgang des OLA wieder mit einem Contentsignal gekoppelt. Hierzu wird das als elektrische Signal verarbeite OSC Signal vorzugsweise wieder in optische Signale umgewandelt. Bei dem Contentsignal handelt es sich vorzugsweise um ein DWDM Content Multiplex Signal, das beispielsweise wiederum 96 x 50 GHz Kanäle im C-Band umfassen kann, jedoch gegenüber dem Eingangssignal vorzugsweise teilweise geändert ist.

Entsprechendes gilt für das zweite DWDM System, d.h., vorzugsweise weist der zweite OLA einen zweiten Signaleingang und einen zweiten Signalausgang auf, der derart konfiguriert ist, dass ein zweiter optischer Überwachungskanal OSC mit zweiten Management Signalen nach dem zweiten Signaleingang von einem (zweiten) Contentsignal ausgekoppelt wird, und vor dem zweiten Signalausgang mit Contentsignal gekoppelt wird. Wiederum soll der Begriff "zweite" nicht darauf hinweisen, dass ein zweiter Signaleingang des OLAs gemeint ist, sondern der Signaleingang des OLA des zweiten Systems. Vorzugsweise ist das AWG so mit dem ersten und zweiten OLA verbunden, dass das Contentsignal bzw. erste und zweite Contentsignale, und vorzugsweise nicht der erste und zweite optische Überwachungskanal, an Eingänge (Pi) des NxN AWGs geleitet werden, wobei Contentsignale von Ausgängen (Po) des NxN AWGs an die ersten und zweiten OLAs geleitet werden, und die Contentsignale im ersten und zweiten OLA vor dem entsprechenden Signalausgang mit den entsprechenden optischer Überwachungskanal OSC gekoppelt werden.

Der erste und/oder zweite OLA ist vorzugsweise ein zwei-stufiger Verstärker bzw. weist vorzugsweise zwei Verstärker auf, die so konfiguriert sind, dass ein erster Verstärker im ersten bzw. zweiten OLA das Contentsignal vor dem Weiterleiten an das NxN AWG verstärkt und ein zweiter Verstärker im ersten bzw. zweiten OLA nach Empfang des Contentsignals aus dem NxN AWG und vor dem Einkoppeln mit dem optischen Überwachungskanal OSC verstärkt. Gemäß einer weiteren bevorzugten Ausführungsform können auch einstufige OLA Verstärker eingesetzt werden. Insbesondere ist dies dann vorteilhaft, wenn es sich bei dem OLA um den "letzten" OLA eines Systems handelt, d.h., wenn nach dem OLA die Signale nicht mehr weiter im gleichen System verstärkt weitergeleitet werden müssen.

Vorzugsweise unterscheiden sich die ersten Management Signale des ersten optischen Überwachungskanals OSC von den zweiten Management Signalen des zweiten optischen Überwachungskanals OSC. Dies ist insbesondere der Fall, wenn sich es sich bei den beiden DWDM Systemen um Systeme unterschiedlicher Hersteller handelt. Mit anderen Worten, dies ist vorzugsweise der Fall, wenn die ersten Management Signale erste proprietäre Signale (eines ersten Herstellers) sind die sich von zweiten proprietären Signalen der zweiten Management Signale unterscheiden, sodass das ersten DWDM System und das zweite DWDM System zu unterschiedlichen Management Systemen gehören.

Vorzugsweise ist die Zahl N bei dem NxN AWG eine natürliche Zahl und bezeichnet die Anzahl der Ports des AWG. Beispielsweise kann N eine natürliche Zahl aus der folgenden Menge sein: 2, 3, 4, 5, 6, 7, 8, 9, 10, 11, 12, 24, 48, 96, 192, 384, oder sogar > 1000. Beispielsweise werden bei einem 12x12 AWG im 4800 GHz breiten C-Band 400 GHz Bandpreite pro AWG Band übertragen. In einem anderen Beispiel werden bei einem 96x96 AWG im 4800 GHz breiten C-Band 50 GHz Bandpreite pro AWG Band übertragen. In einem weiteren Beispiel werden bei einem 192x192 AWG im 4800 GHz breiten C-Band 25 GHz Bandpreite pro AWG Band übertragen.

Zudem ist es erfindungsgemäß möglich, nicht nur zwei Systeme mit einem NxN AWG zu verbinden, sondern bis zu N Systeme, wobei N wiederum eine natürliche Zahl aus der Menge N= 2, 3, 4, 5, 6, 7, 8, 9, 10, 11, 12, 24, 48, 96, 192, 384, oder sogar > 1000sein kann. So können vorzugsweise bis zu N DWDM Systeme über die NxN Ports des AWG entsprechend optisch transparent zusammengeschaltet werden.

Mit anderen Worten, obwohl in den Beispielen NxN AWGs mit N=12 dargestellt sind, ist die Anzahl N der AWG Ports erfindungsgemäß nicht auf 12 beschränkt. Insbesondere kommt diese bevorzugte Zahl 12 durch das Beispiel des etwas erweiterten C-Bands mit 4800 GHz Bandbreite. Dieses kann beispielsweise aufgeteilt werden, z.B. in 12 x 400 GHz. Eine Aufteilung ist jedoch auch in andere Blöcke z.B. 96 x 50 GHz oder 192 x 25 GHz, usw. möglich. Zudem können auch krumme Zahlen genommen werden, z.B. N=37 und/oder es müssen nicht unbedingt die 4800 GHz maximale Bandbreite im C-Band eingehalten werden.

Zudem hängt die maximale Zahl der verkoppelten Systeme davon ab, ob die einzelnen Content Kanäle über ein oder zwei AWGs weitergeführt werden sollen.

Bei bidirektionaler Übertragung mit zwei AWGs und Weiterführung aller Management Kanäle können N Systeme miteinander verkoppelt werden (siehe beispielsweise Bild 5).

Bei bidirektionaler Übertragung mit einem einzigen AWG und Weiterführung aller Management Kanäle können N/2 Systeme miteinander verkoppelt werden.

Bei bidirektionaler Übertragung mit zwei AWGs und ohne Weiterführung aller Management Kanäle können 2xN Systeme miteinander verkoppelt werden.

Zudem sind auch Mischformen möglich, d.h. es können bis zu 24 Systeme mit 2 Stück 12x12 AWGs maximal miteinander verkoppelt werden.

Das NxN AWG erlaubt vorzugsweise eine wellenlängenadressierte Verschaltung der DWDM Systeme.

Für eine bidirektionale Signalübertragung ist das erste DWDM System vorzugsweise mit dem zweiten DWDM System über zwei passive NxN AWGs optisch transparent verbunden.

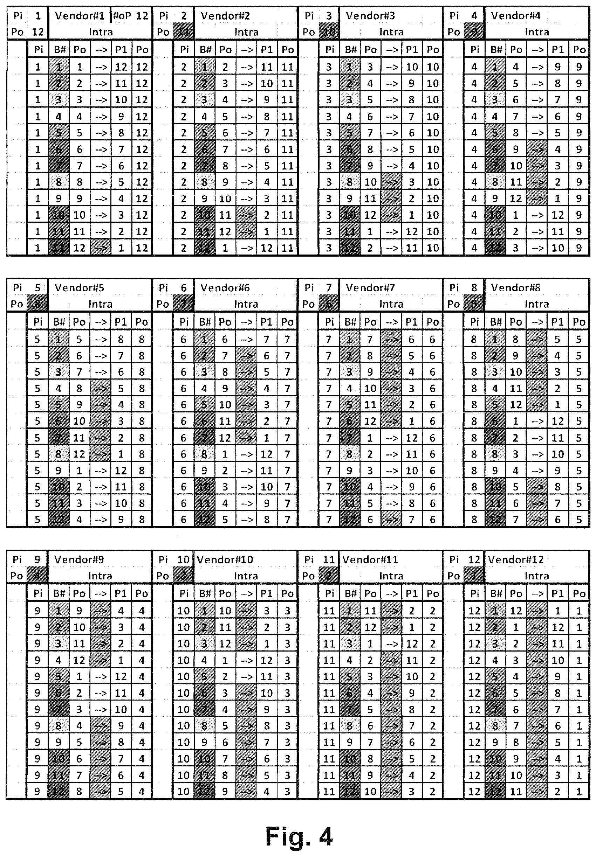

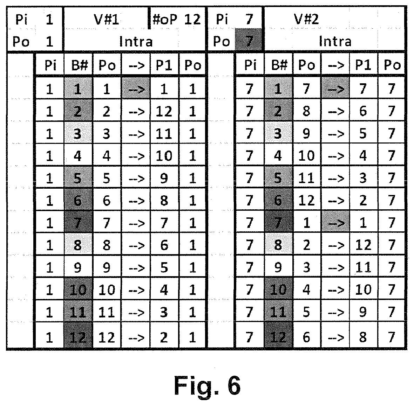

Bevorzugt sind zudem die Verschaltungsprinzipien die in der nachfolgenden detaillierten Beschreibung genauer beschrieben werden. So ist beispielsweise das spezielle Verschaltungsprinzip der AWGs nach den Figuren 4 und 6 bevorzugt, mit dem die Wellenlängen abhängige Verkopplung der Systeme gesteuert werden kann.

Gemäß einer weiteren bevorzugten Ausführungsform kann für eine bidirektionale Verschaltung z.B. für zwei Systeme auch nur ein einzelnes 12x12 AWG benutzt werden, wobei sich dabei die Zahl der übertragbaren 400 GHz DWDM Bänder im C-Band entsprechend reduziert. Dies wird beispielsweise anhand von Figur 6 wie folgt erreicht:

System 1 mit Übertragungsrichtung nach rechts wird in Pin1 eingekoppelt und über Pout12 ausgekoppelt (Fig. 6 oben 1. von links). System 1 mit Übertragungsrichtung nach links wird in Pin2 eingekoppelt und über Pout11 ausgekoppelt (Fig. 6 oben 2. von links).

System 2 mit Übertragungsrichtung nach rechts wird in Pin3 eingekoppelt und über Pout10 ausgekoppelt (Fig. 6 oben 3. von links). System 2 mit Übertragungsrichtung nach links wird in Pi4 eingekoppelt und über Pout9 ausgekoppelt (Fig. 6 oben 4. von links).

Damit sind die Eingangsports Pin1 bis Pin4 und die Ausgangsports Pout9 bis Pout12 durch die Systeme 1 und 2 belegt.

Die optische Verschaltung der anderen Ports mit mittles Glasfaser Patchkabel wird vorzugsweise entsprechend Fig. 6 durchgeführt und ergibt sich zu Pout1 nach Pin12, Pout2 nach Pin11, Pout3 nach Pin10, Pout4 nach Pin9, Pout5 nach Pin8, Pout6 nach Pin7, Pout7 nach Pin6 und Pout8 nach Pin5. Dadurch können vorzugsweise bestimmte aber nicht alle entsprechende Kanäle, zwischen den Systemen 1 und 2 übergekoppelt werden. Vorzugsweise können weitere Systeme 3 bis 6 bidirektional verkoppelt werden, wobei sich die Anzahl der übergekoppelten Bänder entsprechend verringert.

Die vorliegende Erfindung betrifft auch ein Verfahren zum Ausbau eines erfindungsgemäßen Systems, wie beispielsweise oben genannt, in den Ansprüchen beansprucht oder in der detaillierten Beschreibung beschrieben.

Insbesondere betrifft die vorliegende Erfindung ein Verfahren zum optisch transparenten Verbinden eines ersten DWDM, Dense Wavelength Division Multiplex, System mit einem zweiten DWDM System, wobei das erste DWDM System einen ersten OLA, Optical Line Amplifier, zum Verstärken des zu übertragenden Signals aufweist, wobei das zweite DWDM System einen zweiten OLA, Optical Line Amplifier, zum Verstärken des zu übertragenden Signals aufweist. Vorzugsweise ist der erste OLA mit dem zweiten OLA über ein passives NxN AWG, Arrayed-Waveguide Grating, miteinander verbunden.

Gemäß einer weiteren alternativen Ausführungsform könnte auch der optische Eingangs- oder auch Ausgangsverstärker weglassen werden, wenn die davor oder dahinterliegenden Übertragungslängen kurz sind, d.h. keine große Streckendämpfung vorliegen, z.B. kleiner als 5 dB sind. Das entspricht beispielsweise einer Übertragungslänge von ca. bis zu 20 km. Die Aus- und Einkopplung des OSC Kanals wird aber vorzugsweise ähnlich wie bei dem zweistufigen Verstärker durchgeführt. Gemäß einer weiteren bevorzugten Ausführungsform können auch zwei oder mehrere Systeme zusammenschaltet werden, indem man die OSC Kanäle bis zum AWG führt und dann enden lässt, d.h. die OSC Kanäle werden in ihren systemspezifischen optischen Verstärkern terminiert. Die DWDM Content Multiplexsignale werden dann auf einem anderen System weitergeführt, dessen OSC Kanal ebenfalls in seinem systemspezifischen optischen Verstärker terminiert wurde. Dabei ist für eine Verkopplung von zwei Systemen kein AWG notwendig (unidirektional, obere Systemübertragung) da die OLAs auf der linken Seite dem System 1 und die OLAs auf der rechten Seite des AWGs dem System 2 zugeschlagen werden können. Bidirektional kann die Gegenrichtung auch ohne AWG auskommen. Bei der Verschaltung von 3 oder mehreren Systemen ist für die optisch transparente wellenlängenmäßige Verkopplung wieder ein AWG sinnvoll und notwendig, wobei die Verkopplung unidirektional mit einem AWG pro Richtung oder auch bidirektional mit nur einem AWG aber mit verringerter Anzahl von verkoppelten Bändern durchgeführt werden kann.

## Kurze Beschreibung der Zeichnungen

Im Folgenden werden bekannte Komponenten optischer Netzwerke sowie bevorzugte Ausführungsformen der vorliegenden Erfindung unter Bezugnahme auf die Figuren beschrieben. Es zeigen:

Fig. 1 ein NxN AWG mit 12 Ports;

Fig. 2 eine erste Ausführungsform gemäß der vorliegenden Erfindung zur Zusammenschaltung zweier DWDM Systeme für eine uni-direktionale Übertragungsrichtung;

Fig. 3 eine Matrix zum Zusammenschalten passiver optischer Frequenz bzw. Wellenlängen adressierter 400 GHz Kanalbänder des C-Bandes mit den Kanalnummern B# von den Eingangsports Pi auf die Ausgangsports Po des AWGs;

Fig. 4 Tabellen für ein beispielhaftes Anschlussschema für bis zu 12 DWDM Systeme für eine Richtung.

Fig. 5 eine weitere Ausführungsform gemäß der vorliegenden Erfindung zur Zusammenschaltung zweier DWDM Systeme für eine bi-direktionale Übertragungsrichtung;

Fig. 6 eine Tabelle für die beispielhafte Zusammenschaltung von zwei DWDM Systemen an jeweilige AWG Ports 1 und 7 von einem 12x12 AWG;

Fig. 7 eine Ausführungsform für eine bi-direktionale Verschaltung von 2 x 12 DWDM Netz-Knoten Ax und By über zwei 12x12 AWGs mit jeweils 400 GHz Bandbreite für die Kanalbänder B# pro Richtung;

Fig. 8 eine Ausführungsform mit einem AWG für ein uni-direktionales System mit einer Management Weiterführung, ähnlich wie in Fig. 1;

Fig. 9 eine Ausführungsform mit zwei AWGs für ein bi-direktionales System mitManagement Weiterführung, ähnlich wie in Fig. 5;

Fig. 10 eine Ausführungsform mit einem AWG für ein uni-direktionales System mit einer Terminierung der Management Signale;

Fig. 11 eine Ausführungsform mit zwei AWGs für ein bi-direktionales System mit Terminierung der Management Signale;

Fig. 12 eine Ausführungsform mit einem AWG für ein bi-direktionales System mit Management Weiterführung; und

Fig. 13 eine Ausführungsform mit einem AWG für ein bi-direktionales System mit Terminierung der Management Signale.

## Detaillierte Beschreibung der Zeichnungen

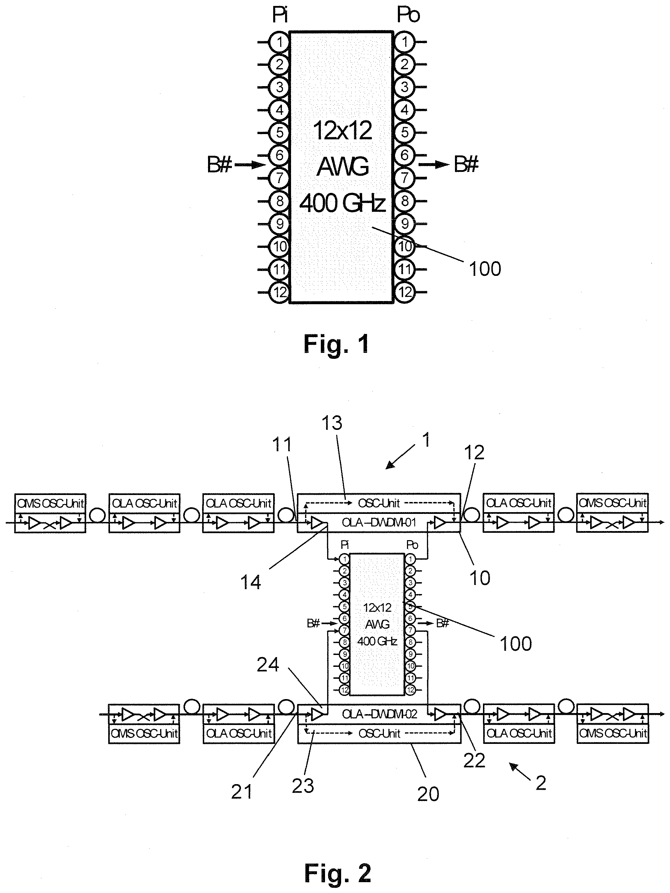

Figur 1 zeigt beispielhaft ein NxN AWG 100 mit z.B. N = 12 Ports und einer Bandbreite der Bänder von 400 GHz. Auf jedem Port kann das gesamte C-Band mit 12 x 400 GHz = 4800 GHz geführt werden. B# bezeichnet die Band-Nummern der optischen 400 GHz Bänder mit den B# = 1, 2, ..., 12, Pi bezeichnet die Eingangsports und Po bezeichnet die Ausgangsports. Beispielsweise handelt es sich bei den Eingangs- bzw. Ausgangsports um Glasfasereingangsports.

Figur 2 zeigt eine erste Ausführungsform für die Zusammenschaltung zweier DWDM Systeme. Für die erfindungsgemäße optisch transparente Zusammenschaltung verschiedener DWDM Systeme, z.B. DWDM-01 (Bezugszeichen 1) und DWDM-02 (Bezugszeichen 2), wird beispielsweise ein passives optisches NxN AWG (arrayed waveguide grating) Bauteil 100 zwischen den beiden Verstärkerstufen 10 und 20 eines optischen Verstärkers des jeweiligen DWDM-01 und DWDM-02 Systems mit den entsprechenden Ein- und Ausgangsports für eine Richtung zusammengeschaltet.

Erfindungsgemäß wird vorzugsweise ein NxN AWG (arrayed waveguide grating) Bauteil 100 z.B. ein 12x12 AWG mit 400 GHz für die Frequenzkanal Bandbreiten entsprechend Figur 1 für die Zusammenschaltung von DWDM Systemen benutzt; es können aber auch andere Anzahlen von Ports mit entsprechend anderen Frequenzkanal Bandbreiten eingesetzt werden.

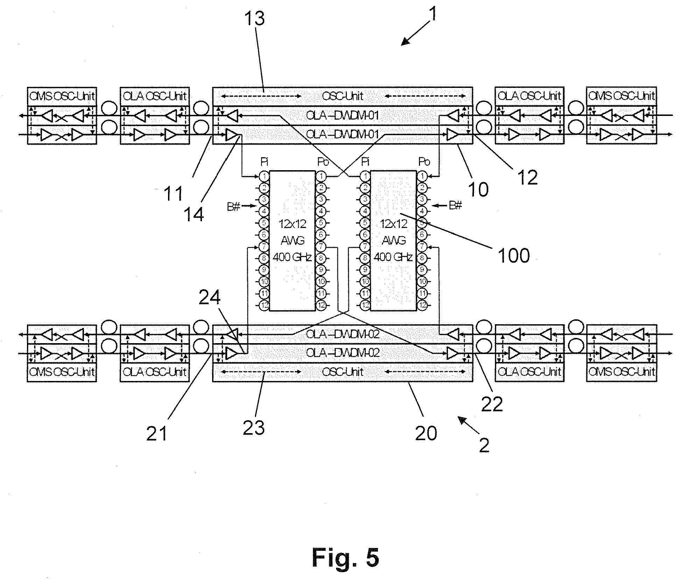

In Figur 2 ist beispielweise die Zusammenschaltung zweier (z.B. auch verschiedener) DWDM Systeme 1 und 2 über ein z.B. 12x12 Port AWG 100 für eine Übertragungsrichtung (uni-direktionale Übertragung) dargestellt. Die Gegenrichtung kann entsprechend mit einem zweiten, vorzugsweise gleichen NxN AWG zusammengeschaltet werden (siehe beispielsweise Fig. 5 weiter unten). Die vorliegende Erfindung ist jedoch nicht auf die Zusammenschaltung von zwei DWDM Systemen beschränkt, vielmehr können auch mehr als zwei DWDM Systeme zusammengeschaltet werden. Für die in Fig. 2 dargestellte Zusammenschaltung werden beispielsweise die AWG Ein- und Ausgangsports 1 und 7 genutzt, wobei auch andere Kombinationen genutzt werden können.

Durch die Verschaltung der AWG Ports zwischen den beiden Stufen der entsprechenden *Optical Line Amplifier* (OLA) 10, 20 der verschiedenen DWDM Systeme 1, 2, vorzugsweise in der Mitte zwischen den beiden Stufen, werden die entsprechenden optischen Überwachungskanäle (Optical Supervisory Channels, OSC) 13, 23 und deren geführte Management Signale aus- und eingekoppelt, ohne das die Verschaltungen mit dem AWG 100 die einzelnen Management Signalflüsse 13, 23 stören. Dadurch bleiben die Punkt-zu-Punkt DWDM Strecken zwischen entsprechenden OMS-Terminals (Optical Multiplex Section, OMS) vorzugsweise ungestört; d.h., die Multiplexfunktion einer DWDM-Verbindung zwischen zwei Netzwerkknoten bleibt vorzugsweise ungestört. Während sich die optischen OLAs zwischen den Knoten eines optischen Netzes auf den Verbindungsstrecken befinden, um die optischen Dämpfungen der Fasern auszugleichen, werden die OMS Sektionen in den Netzknoten terminiert. Damit bleiben die z.B. verschiedenen Management Systeme der einzelnen DWDM Systeme voneinander ungestört und können die entsprechenden Vendor-spezifischen (Herstellerspezifischen) OTS Sektionen (Optical Transport Sections - zwischen DWDM Verstärkern und/oder Knoten) und OMS Sektionen (Optical Multiplex Sections - zwischen DWDM Knoten) managen.

So weist beispielsweise das in Fig. 2 oben dargestellte DWDM System 1 die sechs dargestellten OLAs auf und das unten dargestellte DWDM System 2 die fünf dargestellten OLAs auf. Es ist jedoch zu beachten, dass rechts und links, wie durch die Striche dargestellt, selbsverständlich noch weitere OLAs vorhanden sein können, um die optischen Signale im DWDM System zu verstärken. Die optischen Glasfasern zwischen den OLAs sind beispielsweise als Schleifen dargestellt. Wenn nun ein optisches Signal aus einer Glasfaser in einen OLA am Eingang 11 (bzw. 21) des OLA eingespeist wird, dann wird erfindungsgemäß das Signal aufgespalten in ein Management Signale, die über einen optische Überwachungskanal OSC übertragen werden und Contentsignale, d.h., die eigentlichen zu übertragenden Daten. Die Management Signale des OSC werden vorzugsweise innerhalb des OLA weitergeleitet bzw. weiterverarbeitet. Vorzugsweise verlassen die OSC Management Signale den OLA nicht (siehe OSC-unit). Dies hat beispielsweise den Vorteil, dass die Management Signale einfach weitergeleitet werden können und gemäß den spezifischen Vorgaben des jeweiligen DWDM Systems verwendet werden.

Die Contentsignale, die vorzugsweise durch den OLA von de Management Signale abgespalten werden, können auf das andere DWDM System übertragen werden. Vorzugsweise verwendet man erfindungsgemäß OLAs mit zwei Verstärkern (2-stufige OLAs), d.h., das im OLA abgespaltete Contentsignal kann zunächst durch den ersten Verstärker verstärkt werden (siehe erstes Dreieck im OLA). Danach kann das verstärkte Contentsignal 14 den OLA 10 verlassen und an den AWG 100 weitergeleitet werden.

Contentsignale aus dem AWG, d.h., Signale aus dem eigenen DWDM System oder einem fremden DWDM System werden in den OLA eingespeist und zunächst von dem zweiten Verstärker (sieh zweites Dreieck im OLA) verstärkt und anschließend mit den Management Signalen gekoppelt. Diese gekoppelten Signale werden dann an den Ausgang 10 des OLA geleitet und dort im DWDM System weitergeleitet.

Die Verwendung der NxN AWGs hat den Vorteil, dass mehrere DWDM Systeme einfach miteinander zusammengeschaltet werden können. Mit anderen Worten, die Übertragungssignale der DWDM Systeme auf den DWDM Kanälen werden aber aufgrund der erfindungsgemäßen Funktionsweise des beispielsweisen 12x12 AWGs mit entsprechenden 400GHz Wellenlängenbändern bzw. 50 GHz Wellenlängenkanälen entsprechend der passiven optischen Filterfunktionen des AWGs von den Eingangsports auf entsprechende Ausgangsports geführt.

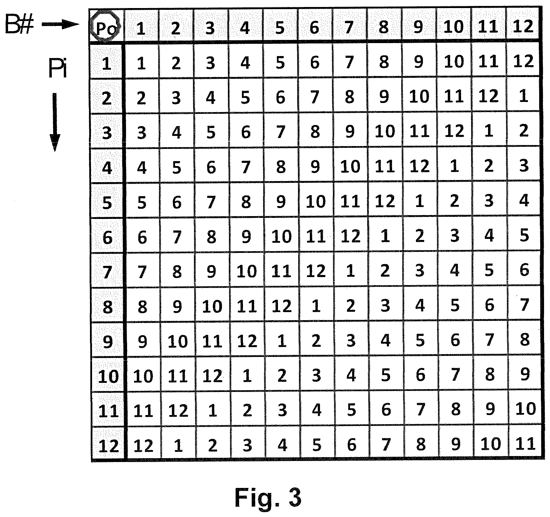

Für ein 12x12 AWG mit 400 GHz Bändern ist die passive optische Frequenz bzw. Wellenlängen adressierte Verschaltung der 400 GHz Kanalbänder mit den Bandnummern B# von den Eingangsports Pi auf die Ausgangsports Po des AWGs in Fig. 3 dargestellt.

Entsprechende Gleichungen für die Berechnung der gegenseitig abhängigen Größen Po, Pi und B# sind nachfolgend unter [1] angegeben. Beispielsweise wird das 400 GHz Band B# = 2 am Eingangsport Pi = 2 auf das Ausgangsport Po = $\underline{3}$ geleitet (siehe doppelte Pfeile in Fig. 3).

$$Po = Mod\left\{\frac{(Pi-1)+(B\#-1)}{12}\right\} + 1$$

$$Pi = Mod\left\{\frac{Po-B\#}{12}\right\} + 1$$

$$B\# = Mod\left\{\frac{Po-Pi)}{12}\right\} + 1 \qquad [\,1\,]$$

Werden die 400 GHz Bandkanäle durch z.B. weitere 1x8 Demultiplexer bzw. 8x1 Multiplexer mit 50 GHz Kanalbandbreiten mit entsprechenden Kanalnummern ch#, ch# = 1, 2, ..., 96 weiter untergeteilt, dann berechnen sich die 400 GHz Bandnummern B# und die 50 GHz Subkanalnummern Subch# nach den Gleichungen in [2]. Beispielsweise wird der 50 GHz Kanal ch# = 13 im 400 GHz Band B# = 2 sowie im 50 GHz Subkanal Subch# = 5 geführt.

$$B\# = Roundup(\frac{ch\#}{8};0)$$

$$Subch\# = Mod\left\{\frac{ch\#-1}{8}\right\} + 1 \qquad [\,2\,]$$

Nachfolgend wird ein Verfahren zur Zusammenschaltung zweier DWDM System detaillierter beschrieben. Beispielsweise können erfindungsgemäß zwei DWDM System zusammengeschaltet werden, auch wenn sich die entsprechenden Management Signale der beiden DWDM System voneinander unterscheiden. So verwenden beispielsweise unterschiedliche Hersteller (Vendor) ihre eigenen, vorzugsweise proprietären Management Signale. Erfindungsgemäß wird es jedoch möglich auch DWDM Systeme zusammenzuschalten, die verschiedene (beispielsweise proprietäre) Management Signale verwenden. Im Folgenden wird zur Anschaulichkeit davon ausgegangen, dass zwei DWDM System zweier unterschiedlicher Anbieter (Vendor) zusammengeschaltet werden. Es ist für einen Fachmann jedoch erkennbar, dass als das zugrundelegende technische Merkmal dahinter nicht der "Vendor" zu sehen ist, sondern die unterschiedlichen Management Signale, die vorzugsweise von unterschiedlichen Vendoren verwendet werden.

Für die Zusammenschaltung von verschiedenen DWDM Vendor Systemen soll folgendes Prinzip für ein mögliches Optimierungsziel der Führung von DWDM Kanälen im eigenen (Vendor) DWDM System zugrunde gelegt werden, um die Kapazität der Anordnung, d.h. die Anzahl der möglichen Wellenlängenkanäle zu maximieren. Andere Optimierungsziele sind auch möglich, z.B. die maximale Überkopplung von DWDM Kanälen in DWDM Systeme anderer Vendoren, oder auch eine Kombination von beiden, oder entsprechend einer vorgegebenen Metrik.

1. Zunächst wird für den ersten Vendor V01 der Eingangsport Pi des NxN AWGs gewählt. Beispielsweise wird der Eingangsport $P_{in01}$ wahlfrei gewählt. Damit ist der Eingangsport $P_{in01}$ besetzt.

2. Dann wird für den ersten Vendor V01 der Ausgangsport Po des NxN AWGs gewählt. Beispielsweise wird der Ausgangsport $P_{out12}$ wahlfrei gewählt. Damit ist der Ausgangsport $P_{out12}$ besetzt (siehe Fig. 4, Teiltabelle oben links).

3. Dann werden Intra-Glasfaserverbindungen, die zwischen entsprechenden Ausgangs- und Eingangsports des AWGs geschaltet werden, nach den Gleichungen in [3] berechnet und entsprechende freie AWG Ports werden per Intra-Glasfaserverbindungen verbunden.

Dabei ist als Optimierungsziel die Führung von DWDM Kanälen im eigenen DWDM System zugrunde gelegt. Beispielsweise ergibt sich für $P_{in,V01} = 1$, $P_{out,V01} = 12$, #AWG_ports = 12 und das Band B# = 1 eine Intra-Glasfaserverbindung zwischen $P_{in,intra} = 12$ und $P_{out,intra} = 1$. Weiteren Intra-Glasfaserverbindungen sind für entsprechend freie Kanalbänder B# = 1, 2, ..., N =12 für die AWG Ein- und Ausgangsports in [3] dargestellt.

$$P_{in,intra} = Mod\left\{\frac{P_{out,V01}-B\#}{\#AWG\_ports}\right\} + 1$$

$$P_{out,intra} = Mod\left\{\frac{P_{in,V01}-1+B\#-1}{\#AWG\_ports}\right\} + 1 \qquad [3]$$

4. Dann können z.B. weitere DWDM Systeme z.B. von weiteren Vendoren V02, V03, ... angeschaltet werden, indem für den nächsten Vendor V02, V03, ... der AWG-Eingangsport $P_{in,V02}$, $P_{in,V03}$, ... gewählt wird. Die entsprechende Intra-Glasfaserverbindung wird dazu aufgehoben. Beispielsweise wird in Fig. 4 für den zweiten Vendor V02 der Eingangsport Pi2 verwendet.

5. Dann wird der entsprechende AWG Ausgangsport $P_{out,V02}$, $P_{out,V03}$, ... für den weiteren Vendor V02, V03, ... nach der Gleichung in [4] berechnet und die dazu entsprechende Intra-Glasfaserverbindung wird aufgehoben.

$$P_{out,Vx} = Mod\left\{\frac{P_{out,V01}+P_{in,V01}-P_{in,Vx}-1}{\#AWG\_ports}\right\} + 1 \qquad [4]$$

Beispielsweise ergibt sich für $P_{in,V01} = 1$, $P_{out,V01} = 12$, #AWG_ports = 12 und $P_{in,V02} = 2$, das AWG Ausgangsport $P_{outV02} = 11$ für den zweiten Vendor V02 (siehe Fig. 4, Teiltabelle oberste Reihe, 2, Spalte).

Weitere Ausgangsports von weiteren angeschalteten DWDM Systemen weiterer Vendoren sind für entsprechend gewählte AWG Eingangsports in Figur 4 dargestellt.

6. Die Schritte 4. und 5. werden so lange wiederholt wie DWDM Systeme angeschaltet werden sollen oder können. An ein NxN AWG können bis zu N DWDM Systeme angeschaltet werden. Eine beispielhafte Verschaltung von bis zu 12 DWDM Systemen an ein z.B. 12x12 AWG ist in Figur 4 dargestellt.

Figur 4 ist so zu lesen, dass in den jeweiligen Vendor spezifischen Blöcken Vendor#x in der ersten Spalte Pi der entsprechende AWG Eingangsport $P_{in,Vx}$ angegeben ist.

In der zweiten Spalte B# sind die Kanalband Nummern der jeweils 400 GHz breiten Bänder B# angegeben.

In der dritten Spalte Po sind die entsprechenden AWG Ausgangsports in Abhängigkeit von der Kanalband Nummer B# angegeben.

In der vierten Spalte zeigen die Pfeile die Intra-Glasfaserverbindungen zwischen den entsprechenden Ausgangsports Po in der dritten Spalte und den Eingangsports Pi in der fünften Spalte an. Dabei ist als Optimierungsziel die Führung von DWDM Kanälen im eigenen Vendor DWDM System zugrunde gelegt. Ist ein Pfeil in der vierten Spalte grau hinterlegt, dann ist diese Intra-Glasfaserverbindung nicht möglich, da die entsprechenden Ports bereits durch Eingangs- oder Ausgangs- Ports von DWDM Systemen belegt sind. Je mehr DWDM Systeme angeschaltet sind, desto geringer ist die Zahl der Intra-Glasfaserverbindungen, wobei sich die Anzahl mit jedem zusätzlich angeschaltetem DWDM System um eine Verbindung reduziert. Bei N angeschalteten DWDM Systemen an ein NxN AWG sind keine Intra-Glasfaserverbindungen mehr möglich. Dabei durchlaufen alle DWDM Signale das NxN AWG nur einmal, so dass die entsprechenden Durchgangsdämpfungen bei ca. 6 dB bis 11 dB liegen.

In der sechsten Spalte sind die Vendor spezifischen AWG Ausgangsports angegeben, wobei es pro Vendor nur ein entsprechendes Ausgangsport gibt, da nur eine Faser an das entsprechende DWDM System angeschlossen werden kann.

Bei der Anschaltung von verschiedenen DWDM Systemen an ein NxN AWG können die Ein- und Ausgangsports für das erste DWDM System wahlfrei gewählt werden. Die Anschaltungen weiterer DWDM Systeme kann entsprechend des oben angegebenen Schemas durchgeführt werden.

In Figur 5 ist der bi-direktionale Aufbau für die Anschaltung von zwei DWDM Systemen an je ein 12x12 AWG pro Richtung dargestellt, wobei jeweils z.B. die AWG Ports 1 und 7 genutzt werden.

Die anderen Ports können mit weiteren DWDM Systemen beschaltet werden, oder es können entsprechend der Gleichungen in "*Gleichungen 3*" oder der Darstellung in Figur 6 Intra-Glasfaserverbindungen geschaltet werden, wobei diese Anordnung pro Richtung für die in Figur 5 dargestellte Verschaltung gilt.

Gleichzeitig können pro Richtung Intra-Glasfaserverbindungen zwischen den AWG Ports (Pin,Pout) (2,12), (3,11), (4,10), (5,9), (6,8), (8,6), (9,5), (10,4), (11,3) und (12,2) geschaltet werden, siehe Figur 6 für den rechten Vendor V#2 Bereich.

Durch den Einsatz von zwei gleichen NxN AWGs, d.h., ein NxN AWG pro Richtung für die bidirektionalen DWDM Systeme können gleichzeitig dieselben Wellenlängen für die Hin- und Rückkanäle der bidirektionalen DWDM Systeme gewählt werden.

Pro Single Mode Faser können DWDM Systeme jeweils 12 x 400 GHz Kanalbänder mit B# = 1, 2, ..., 12 im C-Band tragen, wobei die Bandbreite im C-Band 12 x 400 GHz = 4.800 GHz beträgt.

Nach Figur 5 und 6 werden zwei DWDM Systeme 1 und 2 auf den entsprechenden AWG Ein- und Ausgangsports 1 und 7 miteinander verschaltet.

Das Kanalband B# = 1 des ersten DWDM Systems V01 wird direkt vom AWG Eingangsport $P_{in1}$ auf das AWG Ausgangsport $P_{out1}$ des ersten DWDM Systems V01 geleitet. Dabei erfährt es eine optische Dämpfung von ca. 6 dB bis 11 dB.

Das Kanalband B# = 7 des ersten DWDM Systems V01 wird direkt vom AWG Eingangsport $P_{in1}$ auf das AWG Ausgangsport $P_{out7}$ des zweiten DWDM Systems V02 geleitet. Dabei erfährt es eine optische Dämpfung von ca. 6 dB bis 11 dB.

Die anderen Kanalbänder B# = 2, 3, 4, 5, 6, 8, 9, 10, 11, 12 am AWG Eingangsport $P_{in1}$ des ersten DWDM Systems V01 werden aufgrund der z.B. nach Figur 6 angegebenen, für die Weiterleitung auf dem eigenen DWDM System optimierten Intra-Glasfaserverschaltungen auf das AWG Ausgangsport $P_{out1}$ des ersten DWDM Systems V01 geleitet. Dabei durchlaufen die Kanalbänder das 12x12 AWG zweimal und erfahren eine optische Dämpfung von ca. 2 x 6 dB bis 2 x 11 dB.

Für die Verschaltung der gegenläufigen DWDM Signale mit dem zweiten AWG nach Fig. 5 gelten dieselben entsprechenden Funktionalitäten. Für die Eingangssignale des zweiten DWDM Systems auf dem AWG Eingangsport $P_{in7}$ gelten entsprechende Funktionalitäten.

Das Kanalband B# = 1 des zweiten DWDM Systems V02 wird direkt vom AWG Eingangsport $P_{in7}$ auf das AWG Ausgangsport $P_{out7}$ des zweiten DWDM Systems V02 geleitet. Dabei erfährt es eine optische Dämpfung von ca. 6 dB bis 11 dB.

Das Kanalband B# = 7 des zweiten DWDM Systems V02 wird direkt vom AWG Eingangsport $P_{in7}$ auf das AWG Ausgangsport $P_{out1}$ des ersten DWDM Systems V01 geleitet. Dabei erfährt es eine optische Dämpfung von ca. 6 dB bis 11 dB.

Die anderen Kanalbänder B# = 2, 3, 4, 5, 6, 8, 9, 10, 11, 12 am AWG Eingangsport $P_{in7}$ des zweiten DWDM Systems V02 werden aufgrund der z.B. nach Figur 6 angegebenen, für die Weiterleitung auf dem eigenen DWDM System optimierten Intra-Glasfaserverschaltungen auf das AWG Ausgangsport $P_{out7}$ des zweiten DWDM Systems V02 geleitet. Dabei durchlaufen die Kanalbänder das 12x12 AWG zweimal und erfahren eine optische Dämpfung von ca. 2 x 6 dB bis 2 x 11 dB.

Die auf Weiterleitung der DWDM Kanäle auf die eignen DWDM Systeme optimierte Intra-Glasfaserverschaltung zwischen den AWG Ein- und Ausgangsports z.B. wie hier nach Figur 6 durchgeführt, ist nicht zwingend und kann willkürlich entsprechend der gewünschten Verschaltungen bzw. Übertragungswege oder anderer Optimierungsziele geändert werden.

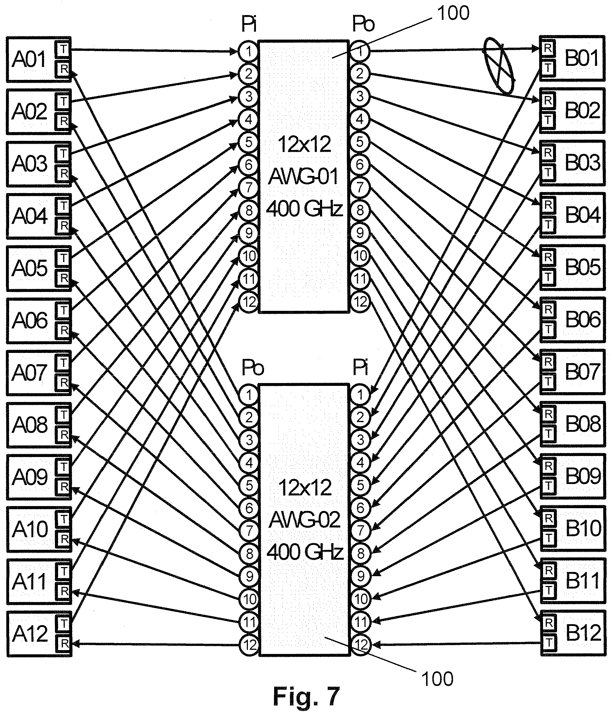

Im Fall, dass z.B. 12 DWDM Netz-Knoten A01, A02, .. A12 entsprechend Figur 7 mit zwei 12 x 12 AGWs bidirektional mit 12 weiteren Netz-Knoten B01, B02, ... B12 verschaltet werden, werden jeweils 400 GHz Kanalbänder B# zwischen den entsprechenden DWDM NetzKnoten geschaltet. Dadurch ist eine wellenlängenmäßige Vermaschung zwischen jedem Ax Netz-Knoten mit jedem By Netz-Knoten sowie jedem Bx Netz-Knoten mit jedem Ay Netz-Knoten (x = 1, 2, ..., 12) (y = 1, 2, ..., 12) mit einem Kanalband B# mit der Bandbreite von jeweils 400 GHz pro Übertragungsrichtung gegeben. Dabei können für die bidirektionalen Verbindungen gleiche Wellenlängen für die Kanalbänder B# und damit gleiche optische Wellenlängen für die Hin- und Rückrichtungen genutzt werden. Zusätzlich ermöglicht die Erfindung den Aufbau einfacher modularer Netzstrukturen mit hohen Kapazitäten. Dabei können die 400 GHz breiten Kanalbänder modular ausgebaut werden, z.B. mit 100 Gbit/s über 50 GHz Wellenlängenkanäle, entsprechend der notwendigen Übertragungskapazitäten.

Für die maximalen bidirektionalen Übertragungskapazitäten ergibt sich ein Wert von 12 x 12 = 144 Verbindungen mit jeweils einer Bandbreite von 400 GHz pro Übertragungsrichtung. Wird eine spektrale Effizienz von 2 Bit/s/Hz angenommen, wobei 100 Gbit/s über 50 GHz Kanäle über > 3.000 km übertragen werden können (siehe beispielsweise 9,6 Tbit/s, 96 x 100 Gbit/s DWDM Übertragung über 3000 km; http://www.cisco.com/en/US/prod/collateral/optical/ps5724/ps2006/data_sheet_c78-713296.html), dann ergibt sich eine Kapazität pro Richtung von 144 x 400 GHz x 2 Bit/s/Hz = 115,2 TBit/s d.h. eine bidirektionale Kapazität von 115,2 TBit/s pro Richtung.

Die Netzarchitektur nach Fig. 7 kann für den Aufbau eines sicheren redundanten Backbone DWDM Netzes mit der Möglichkeit von Ersatzschaltungen genutzt werden. Dazu werden z.B. N = 12 Netzbereiche angenommen, in denen sich jeweils 2 entsprechende Netzknoten Ax und Bx (x = 1, 2, ..., N = 12) mit gleichen Ziffern pro Netzbereich befinden. Damit stehen für die Anbindung eines Netzbereiches zwei bidirektionale Verbindungen mit jeweils einer Bandbreite pro Richtung von 400 GHz zur Verfügung. Wird eine Verbindung durch einen Fehlerfall unterbrochen, wie in Fig. 7 für den Netzknoten B01 angedeutet, dann kann der Netzknoten A01 den Verkehr zu allen anderen Netzbereichen zu den Bx (x = 1, 2, ..., N =12) Netzknoten aufrechterhalten. Dazu ist eine weitere nachgelagerte Verbindung zwischen den jeweils 2 Netzknoten Ax und Bx (x = 1, 2, ..., N = 12) eines Bereiches notwendig.

Nachfolgend werden einige beispielhafte Vorteile der vorliegenden Erfindung kurz zusammengefasst.

Die Erfindung ermöglicht eine bidirektionale Verschaltung von verschiedenen DWDM Systemen mit verschiedenen Management Signale, z.B. auch verschiedener Hersteller über zwei NxN AWGs. Solche Verschaltungen waren bisher nicht möglich.

Die Erfindung ermöglicht bei der Verschaltung der verschiedenen DWDM Systeme den weiterhin ungestörten Management Betrieb der einzelnen DWDM Systeme, die sich auch gegenseitig nicht stören. Dabei können entsprechende OTS (optical transmission section) und OMS (optical multiplex section) Abschnitte der Vendor spezifischen DWDM System weiterhin ungestört gemanaged werden.

Die Erfindung ermöglicht bei der Verschaltung der DWDM Systeme die gleichen Wellenlängen Kanalbänder (Kanäle) für die Hin- und Rückrichtung der bidirektionalen Verbindungen zu nutzen, wobei zwei gleiche NxN AWGs eingesetzt werden, jeweils **eins pro Hin- bzw. Rück-Richtung.**

Die Erfindung ermöglicht den Aufbau einfacher modularer Kernnetzstrukturen mit hohen Kapazitäten. Dabei können die 400 GHz breiten Kanalbänder modular ausgebaut werden, z.B. mit 100 Gbit/s über 50 GHz Wellenlängenkanäle, entsprechend der notwendigen Übertragungskapazitäten.

Die Erfindung ermöglicht die transparente optische Übergabe von "Alien Wavelength" Kanälen von einem DWDM System eines Vendors V01 an ein anderes DWDM System eines anderen Vendors V02, ohne eine optisch-elektrisch-optische Wandlung in einem Transponder durchführen zu müssen. Dabei können auch mehrere Kanalbänder durch Intra-Glasfaserverbindungen geschaltet werden, das bisher so nicht möglich war, sondern nur in einem re-konfigurierbaren optischen Add/Drop Multiplexer mit erheblich mehr Aufwand zu realisieren war.

Durch die Erfindung ist der Aufbau einer sicheren Backbone Netzarchitektur mit Ersatzschaltungen für N Netzbereiche möglich, in denen sich jeweils 2 redundante Netzknoten Ax und Bx (x = 1, 2, ..., N =12) befinden, die redundant mit entsprechenden Netzknoten der anderen Bereiche verbunden sind.

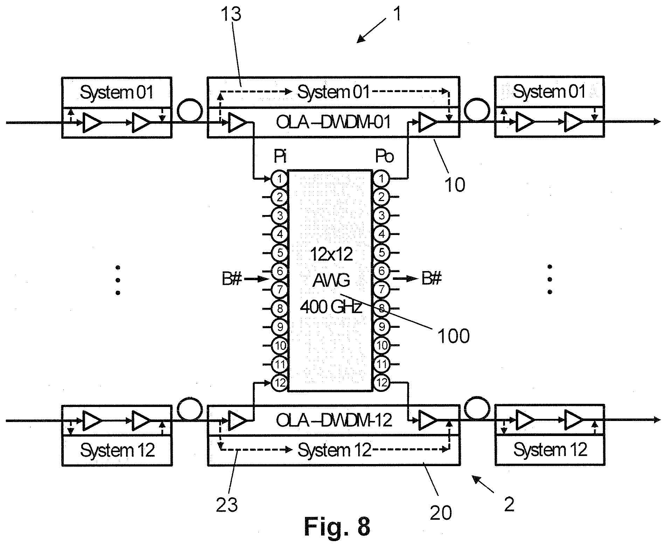

Fig. 8 zeigt eine weitere Ausführungsform mit einem AWG für ein uni-direktionales System mit einer Management Weiterführung, ähnlich wie in Fig. 1. Mit anderen Worten, die Management Signale werden im OLA 10, 20 weitergeführt, wohingegen die Nutzerdaten (Contentsignale) zwischen verschiedenen Systemen mittels AWG 100 übertragen werden. Ähnlich wie in Fig. 1 ist hier nur eine uni-direktionale Richtung dargestellt. Mit einem 12x12 AWG 100 können erfindungsgemäß bis zu 12 Systeme uni-direktional verbunden werden. Exemplarisch ist das erste System an dem Eingang Pi=1 und am Ausgang Po=1 angeschlossen und das zwölfte System am Eingang Pi=12 und am Ausgang Po=12 angeschlossen. Dazwischen können weitere zehn Systeme angeschlossen werden, was durch die Punkte dargestellt wird.

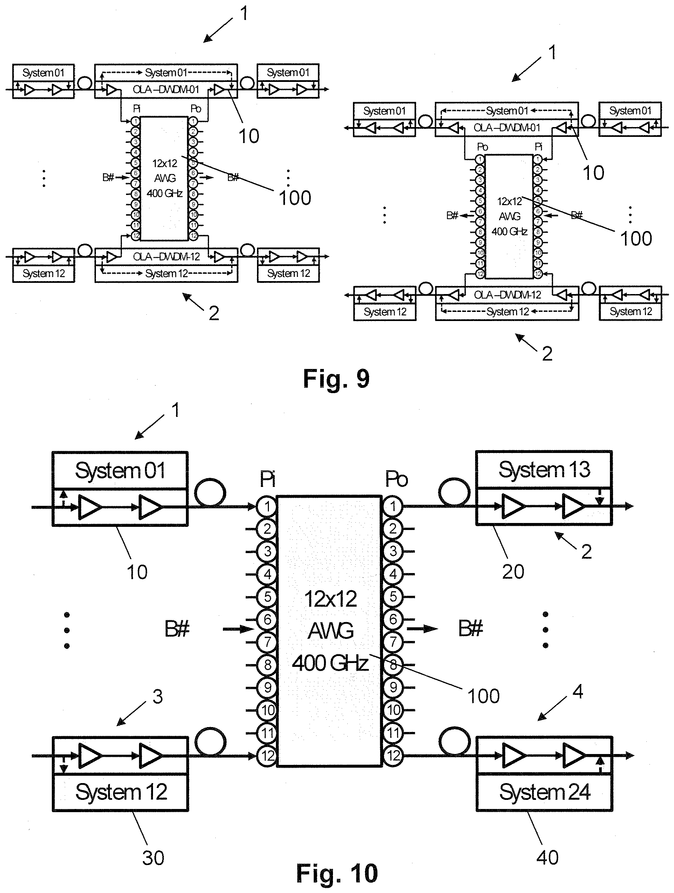

Fig. 9 zeigt eine weitere Ausführungsform mit zwei AWGs 100 für ein bi-direktionales System mit einer Management Weiterführung, ähnlich wie in Fig. 5. Bei der Darstellung in Fig. 9 sind jedoch die beiden AWGs versetzt zueinander gezeigt. In dieser Ausführungsform dient das erste AWG links für die eine Richtung und das zweite AWG für die Gegenrichtung. Im Prinzip zeigt die Fig. 9 das gleiche wie die Fig. 8, jedoch getrennt für die zwei Übertragungsrichtungen. Die maximale Anzahl von zwölf bi-direktional verbundenen Systemen ist wiederum durch die Punkte symbolisiert.

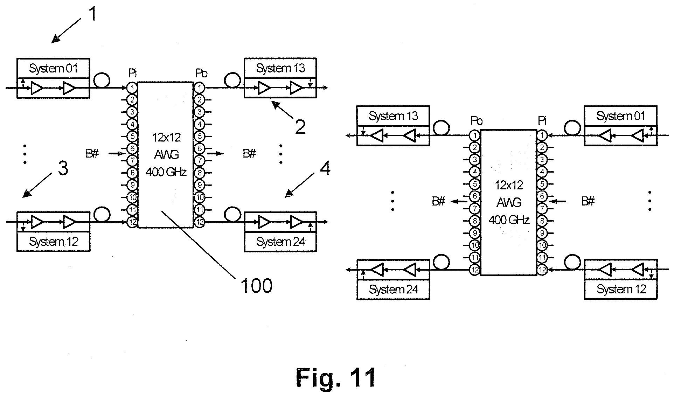

Fig. 10 zeigt eine weitere Ausführungsform mit einem AWG 100 für ein unidirektionales System. Im Gegensatz zur Ausführungsform in Figur 8 zeigt die Figur 10 jedoch ein uni-direktionales System ohne Managementweiterführung, wodurch sich die Anzahl zu koppelnder Systeme auf die doppelte Anzahl erhöht. So können beispielsweise mit einem 12x12 AWG vierundzwanzig Systeme gekoppelt werden, wenn die Managementsignale nicht weiter geführt werden und in den jeweiligen Systemen am Ende im OLA 10, 20, 30 und 40 terminiert werden. So zeigt die Figur 10 beispielsweise links oben den letzten OLA 10 eines ersten Systems System 1 (System 01) bei dem ähnlich wie in Figur 1 die Managementsignale des OSC vor dem ersten Verstärker (erstes Dreieck) vom Contentsignal abgekoppelt werden, wobei dieses OSC Signal dann im letzten OLA 10 des Systems 1 terminiert werden, so dass aus dem OLA 10 des Systems 01 nur noch das Contentsignal herauskommt, dass an dem Eingang Pi=1 eingespeist wird. Entsprechendes gilt für die weiteren Systeme bis System 3 (System 012), wobei all diese Systeme auf der linken Seite enden und die entsprechenden Managementsignale des OSC jeweils im letzten OLA terminiert werden. Das AWG 100 dient ähnlich wie in den oben gezeigten Ausführungsformen lediglich zur Kopplung der Contentsignale, wobei an die entsprechenden Ausgangsports Po= 1-12 System 13- System 24 angeschlossen werden können. Mit anderen Worten die Systeme 13-24 enden auf der rechten Seite nach links bzw. beginnen auf dieser Seite, so dass eine Weiterführung des OSC hier nicht nötig ist. Entsprechend ist lediglich der kleine Pfeil nach dem zweiten Verstärker (zweites Dreieck) auf das Contentsignal gerichtet, wobei das Contentsignal zusammen mit dem OSC dann an die nächsten OLAs (nicht dargestellt) der entsprechenden Systeme 13-24 weitergeleitet wird. Eine bi-direktionale Verbindung bzw. ein bi-direktionales System ohne Managementweiterführung erhält man, in dem man die Figur 10 für die eine Richtung und für die zweite Richtung darstellt. Entsprechend werden zwei 12x12AWGs benötigt, um 24 unabhängige Systeme miteinander bi-dirketional zu verbinden (siehe Fig. 11).

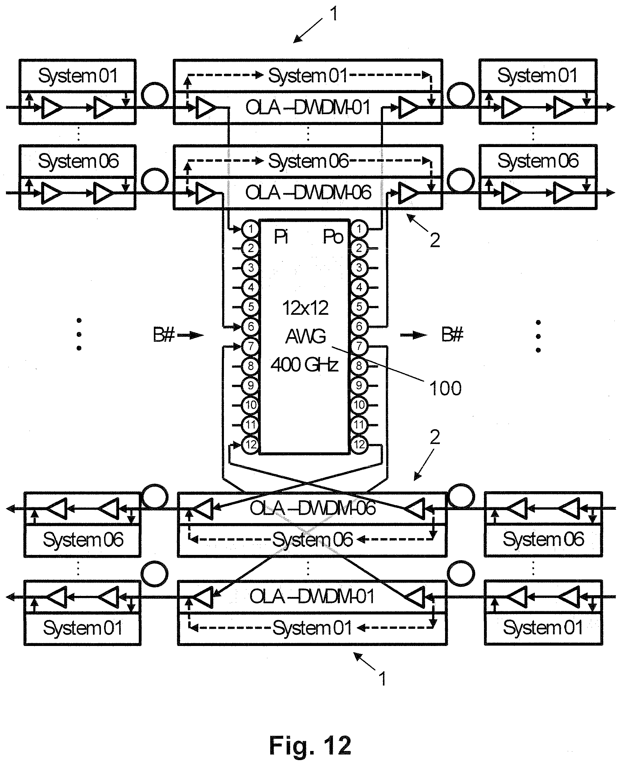

Schließlich zeigt die Figur 12 ein bi-direktionales System mit einer Managementweiterführung mit nur einem einzigen AWG 100. Wiederum ist ein 12x12 AWG 100 dargestellt, mit dem maximal sechs verschiedene Systeme bi-direktional gekoppelt bzw. verbunden werden können. Bei dieser bi-direktionalen Kopplung handelt es sich um Systeme bei denen das Management innerhalb der entsprechenden OLAs weitergeführt werden, ähnlich wie in den Figuren 2 und 5 dargestellt.

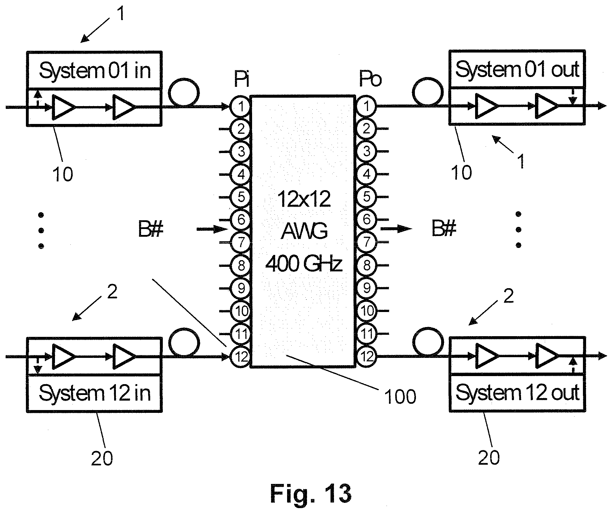

Schließlich zeigt die Figur 13 eine weitere erfindungsgemäße Ausführungsform bei der mittels eines AWGs 100 bi-direktional zwölf Systeme ohne eine Weiterführung der Managementsignale möglich ist. Das 12x AWG wird hier am Ende bzw. am Anfange der Systeme 01-12 angeschlossen, so dass eine Weiterführung der Managementsignale nicht mehr nötig ist. In dieser Darstellung bezeichnet "System 01 in", dass das System 01 auf der linken Seite endet und das Contentsignal aus dem letzten OLA 10 des System 01 in das AWG 100 geleitet wird "Pi". Dies stellt die eine Richtung der Systeme 01-012 dar. Die andere Richtung, d.h. die Gegenrichtung ist auf der rechten Seite dargestellt, wobei auf der rechten Seite die Bezeichnung "System 01 out" bedeutete, dass dieses letzte OLA 10 des Systems an den Anschluss Po angeschlossen wird.

**Patentansprüche**

1. System mit einem ersten DWDM, Dense Wavelength Division Multiplex, System (1) und einem zweiten DWDM System (2), die optisch transparent zusammengeschaltet sind, insbesondere für eine unidirektionale Signalübertragung, wobei

    das erste DWDM System (1) einen ersten OLA, Optical Line Amplifier, (10) zum Verstärken des zu übertragenden Signals aufweist, und
    das zweite DWDM System (2) einen zweiten OLA (20) zum Verstärken des zu übertragenden Signals aufweist, **dadurch gekennzeichnet, dass**
    der erste OLA (10) und der zweite OLA (20) über ein passives NxN AWG, Arrayed-Waveguide Grating, (100) miteinander verbunden sind, wobei
    der erste OLA (10) einen ersten Signaleingang (11) und einen ersten Signalausgang (12) aufweist, und derart konfiguriert ist, dass
    ein erster optischer Überwachungskanal OSC, optical supervisory channel, (13) mit ersten Management Signalen nach dem ersten Signaleingang (11) von einem ersten Contentsignal (14) ausgekoppelt wird, und vor dem ersten Signalausgang (12) mit dem ersten Contentsignal (14) gekoppelt wird, wobei
    der zweite OLA (20) einen zweiten Signaleingang (21) und einen zweiten Signalausgang (22) aufweist, und derart konfiguriert ist, dass
    ein zweiter optischer Überwachungskanal OSC (23) mit zweiten Management Signalen nach dem zweiten Signaleingang (21) von einem zweiten Contentsignal (24) ausgekoppelt wird, und vor dem zweiten Signalausgang (22) mit dem zweiten Contentsignal (24) gekoppelt wird, wobei
    das NxN AWG so mit dem ersten und zweiten OLA (10, 20) verbunden ist, dass das erste und zweite Contentsignal (14, 24) an Eingänge (Pi) des NxN AWGs geleitet werden, wobei Contentsignale von Ausgängen (Po) des NxN AWGs an die ersten und zweiten OLAs (10, 20) geleitet werden, und die Contentsignale im ersten und zweiten OLA vor dem entsprechenden Signalausgang (12, 22) mit dem entsprechenden optischen Überwachungskanal OSC (13, 23) gekoppelt werden, und wobei
    die ersten Management Signale des ersten optischen Überwachungskanals OSC sich von den zweiten Management Signale des zweiten optischen Überwachungskanals OSC unterscheiden, und die ersten Management Signale erste proprietäre Signale sind, die sich von zweiten proprietären Signalen der zweiten Management Signale unterscheiden, sodass das erste DWDM System (1) und das zweite DWDM System (2) zu unterschiedlichen Management Systemen gehören.

2. System nach Anspruch 1, wobei der erste und/oder zweite OLA (10, 20) ein zweistufiger Verstärker ist bzw. zwei Verstärker aufweist, und so konfiguriert ist, dass

    i) ein erster Verstärker im ersten bzw. zweiten OLA (10, 20) das erste bzw. zweite Contentsignal (14, 24) vor dem Weiterleiten an das NxN AWG verstärkt und
    ii) ein zweiter Verstärker im ersten bzw. zweiten OLA (10, 20) nach Empfang des Contentsignals aus dem NxN AWG und vor dem Einkoppeln mit dem optischen Überwachungskanal OSC verstärkt.

3. System nach einem der vorhergehenden Ansprüche, wobei

i) die Zahl N bei dem NxN AWG die Anzahl der Ports ist und eine natürliche Zahl aus der folgenden Menge ist: 2, 3, 12, 96, 192, 384, > 1000 und/oder
ii) wobei bei N=12 pro Port 400 GHz geführt werden können
iii) wobei bei N=96 pro Port 50 GHz geführt werden können
iv) wobei bei N=192 pro Port 25 GHz geführt werden können
v) wobei bei N=384 pro Port 12,5 GHz geführt werden können.

4. System nach einem der vorhergehenden Ansprüche, mit bis zu N, mit N= 2, 3, > 1000 DWDM Systemen, die über die NxN Ports des AWG entsprechend optisch transparent zusammengeschaltet werden.

5. System nach Anspruch 4, wobei das NxN AWG eine wellenlängenadressierte Verschaltung der bis zu N DWDM Systeme erlaubt.

6. System nach einem der vorhergehenden Ansprüche, wobei für eine bidirektionale Signalübertragung das erste DWDM System (1) mit dem zweiten DWDM System (2) über zwei passive NxN AWG optisch transparent verbunden ist.

7. System nach einem der vorhergehenden Ansprüche, wobei bis zu N/2 DWDM Systeme über ein einzelnes NxN AWG bi-direktional verbunden sind.

8. Verfahren zum optisch transparenten Verbinden eines ersten DWDM, Dense Wavelength Division Multiplex, Systems (1) mit einem zweiten DWDM System (2), mit den Schritten:

Bereitstellen des ersten DWDM Systems (1) mit einem ersten OLA (10), Optical Line Amplifier;
Bereitstellen des zweiten DWDM Systems (2) mit einem zweiten OLA (20); und
Verbinden des ersten OLA (10) mit dem zweiten OLA (20) mittels eines passiven NxN AWGs (100), Arrayed-Waveguide Grating, um ein System nach einem der Ansprüche 1 - 7 zu erhalten.

9. Verfahren nach Anspruch 8, wobei der erste OLA (10) und/oder zweite OLA (20) ein einstufiger oder ein zweistufiger OLA ist.

**Claims**

1. A system comprising a first DWDM, dense wavelength division multiplex, system (1) and a second DWDM system (2) which are connected in an optically transparent manner, in particular for a unidirectional signal transmission, wherein
the first DWDM system (1) comprises a first OLA, optical line amplifier, (10) for amplifying the signal to be transmitted, and
the second DWDM system (2) comprises a second OLA (20) for amplifying the signal to be transmitted,
**characterized in that**
the first OLA (10) and the second OLA (20) are connected with each other via a passive NxN AWG, arrayed waveguide grating, (100) wherein
the first OLA (10) comprises a first signal input (11) and a first signal output (12) and is configured such that a first optical supervisory channel, OSC, (13) with first management signals is decoupled from a first content signal (14) downstream of the first signal input (11) and is coupled to the first content signal (14) upstream of the first signal output (12),
wherein
the second OLA (20) comprises a second signal input (21) and a second signal output (22) and is configured such that a second optical supervisory channel, OSC, (23) with second management signals is decoupled from a second content signal (14) downstream of the second signal input (21) and coupled to the second content signal (14) upstream of the second signal output (22),
and wherein
the NxN AWG is connected such to the first and second OLAs (10, 20) that the first and second content signals (14, 24) are guided to inputs (Pi) of the NxN AWG, wherein content signals are guided from outputs (Po) of the NxN AWG to the first and second OLAs (10, 20) and the content signals in the first and the second OLA are coupled upstream of the respective signal output (12, 22) to the corresponding optical supervisory channel, OSC, (13, 23), and wherein

the first management signals of the first optical supervisory channel, OSC, differ from the second management signals of the second optical supervisory channel, OSC, and the first management signals are first proprietary signals which differ from the second proprietary signals of the second management signals so that the first DWDM system (1) and the second DWDM system (2) belong to different management systems.

2. The system according to claim 1, wherein the first and/or the second OLA (10, 20) is a two-step amplifier or comprises two amplifiers and is configured such that

    (i) a first amplifier in the first or second OLA (10, 20) amplifies the first or second content signal (14, 24) before further transmission to the NxN AWG and
    (ii) a second amplifier in the first or second OLA (10, 20) amplifies after receipt of the content signal from the NxN AWG and before coupling with the optical supervisory channel, OSC.

3. The system according to any one of the preceding claims, wherein

    (i) in the NxN AWGs the number N is the number of ports and a natural number from the following set: 2, 3, 12, 96, 192, 384, >1000 and/or
    (ii) in case N = 12, 400 GHz can be guided per port,
    (iii) in case N = 96, 50 GHz can be guided per port,
    (iv) in case N = 192, 25 GHz can be guided per port,
    (v) in case N = 384, 12.5 GHz can be guided per port.

4. The system according to any one of the preceding claims with up to N, with N = 2, 3, >1000, DWDM systems which are accordingly connected in an optically transparent manner via the NxN ports of the AWG.

5. The system according to claim 4, wherein the NxN AWG allows a wavelength-addressed connection of the up to N DWDM systems.

6. The system according to any one of the preceding claims, wherein for a bidirectional signal transmission, the first DWDM system (1) is connected to the second DWDM system (2) via two passive NxN AWGs in an optically transparent manner.

7. The system according to any one of the preceding claims, wherein up to N/2 DWDM systems are connected bidirectionally via a single NxN AWG.

8. A method for connecting a first DWDM, dense wavelength division multiplex, system (1) to a second DWDM system (2) in an optically transparent manner, comprising the steps of:

    providing the first DWDM system (1) with a first OLA (10), optical line amplifier, providing the second DWDM system (2) with a second OLA (20); and
    connecting the first OLA (10) to the second OLA (20) via a passive NxN AWG (100), arrayed waveguide grating, in order to obtain a system according to any one of claims 1 to 7.

9. The method according to claim 8, wherein the first OLA (10) and/or the second OLA (20) is a one-step or a two-step OLA.

**Revendications**

1. Système avec un premier système de multiplexage par division d'ondes denses DWDM (1) et un deuxième système DWDM (2) interconnectés de manière optiquement transparente, en particulier pour une transmission unidirectionnelle de signaux, où
le premier système DWDM (1) comprend un premier amplificateur de ligne optique OLA (10) pour l'amplification du signal à transmettre, et

le deuxième système DWDM (2) comprend un deuxième OLA (20) pour l'amplification du signal à transmettre, **caractérisé en ce que**

le premier OLA (10) et le deuxième OLA (20) sont reliés l'un à l'autre par un réseau sélectif planaire passif AWG NxN (100),

le premier OLA (10) présentant une première entrée de signaux (11) et une première sortie de signaux (12), et étant configuré

de telle manière qu'un premier canal de supervision optique OSC (13) avec des premiers signaux de gestion est découplé par un premier signal de contenu (14) après la première entrée de signaux (11), et est couplé avec le premier signal de contenu (14) avant la première sortie de signaux (12),

le deuxième OLA (20) présentant une deuxième entrée de signaux (21) et une deuxième sortie de signaux (22), et étant configuré

de telle manière qu'un deuxième canal de supervision optique OSC (23) avec des deuxièmes signaux de gestion est découplé par un deuxième signal de contenu (24) après la deuxième entrée de signaux (21), et est couplé avec le deuxième signal de contenu (24) avant la deuxième sortie de signaux (22),

le réseau AWG NxN étant relié au premier et au deuxième OLA (10, 20) de telle manière que le premier et le deuxième signal de contenu (14, 24) sont conduits vers des entrées (Pi) du réseau AWG NxN, les signaux de contenu des sorties (Po) du réseau AWG NxN étant conduits vers le premier et le deuxième OLA (10, 20), et les signaux de contenu dans le premier et le deuxième OLA étant couplés avec le canal de supervision optique OSC (13, 23) correspondant avant la sortie de signaux (12, 22) correspondante, et les premiers signaux de gestion du premier canal de supervision optique OSC se distinguant des deuxièmes signaux de gestion du deuxième canal de supervision optique OSC, et les premiers signaux de gestion étant des premiers signaux propriétaires qui se distinguent des deuxièmes signaux propriétaires des deuxièmes signaux de gestion, de telle manière que le premier système DWDM (1) et le deuxième système DWDM (2) relèvent de systèmes de gestion différents.

2. Système selon la revendication 1, où le premier et/ou le deuxième OLA (10, 20) sont un amplificateur à deux étages ou comprennent deux amplificateurs, et sont configurés de telle manière

    i) qu'un premier amplificateur dans le premier ou le deuxième OLA (10, 20) amplifie le premier ou le deuxième signal de contenu (14, 24) avant transmission au réseau AWG NxN, et

    ii) qu'un deuxième amplificateur dans le premier ou le deuxième OLA (10, 20) amplifie après réception du signal de contenu du réseau AWG NxN et avant couplage avec le canal de supervision optique OSC.

3. Système selon l'une des revendications précédentes, où

    i) le nombre N est le nombre de ports pour le réseau AWG NxN et est un entier naturel de la suite suivante : 2, 3, 12, 96, 192, 384, > 1000 et/ou
    ii) par port 400 GHz peuvent être conduits par port si N=12,
    iii) où 50 GHz peuvent être conduits par port si N=96,
    iv) où 25 GHz peuvent être conduits par port si N=192,
    v) où 12,5 GHz peuvent être conduits par port si N=384.

4. Système selon l'une des revendications précédentes, avec jusqu'à N systèmes DWDM, N étant = 2, 3, > 1000, interconnectés en conséquence de manière optiquement transparente par les NxN ports du réseau AWG.

5. Système selon la revendication 4, où le réseau AWG NxN permet une connexion adressée par longueur d'onde des jusqu'à N systèmes DWDM.

6. Système selon l'une des revendications précédentes, où pour une transmission bidirectionnelle de signaux du premier système DWDM (1) avec le deuxième système DWDM (2) plus de deux réseaux passifs AWG NxN sont connectés de manière optiquement transparente.

7. Système selon l'une des revendications précédentes, où jusqu'à N/2 systèmes DWDM sont connectés bidirectionnellement par un seul réseau AWG NxN.

8. Procédé de connexion optiquement transparente d'un premier système de multiplexage par division d'ondes denses DWDM (1) avec un deuxième système DWDM (2), comprenant les étapes suivantes :

    mise à disposition du premier système DWDM (1) avec un premier amplificateur de ligne optique OLA (10) ;

mise à disposition du deuxième système DWDM (2) avec un deuxième OLA (20) ; et
connexion du premier OLA (10) avec le deuxième OLA (20) au moyen d'un réseau sélectif planaire passif AWG NxN (100), pour obtenir un système selon l'une des revendications 1 à 7.

9. Procédé selon la revendication 8, où le premier OLA (10) et/ou le deuxième OLA (20) sont un OLA à un étage ou un OLA à deux étages.

**Fig. 1**

**Fig. 2**

B# →

Pi

| Po | 1 | 2 | 3 | 4 | 5 | 6 | 7 | 8 | 9 | 10 | 11 | 12 |
|----|----|----|----|----|----|----|----|----|----|----|----|----|
| 1 | 1 | 2 | 3 | 4 | 5 | 6 | 7 | 8 | 9 | 10 | 11 | 12 |
| 2 | 2 | 3 | 4 | 5 | 6 | 7 | 8 | 9 | 10 | 11 | 12 | 1 |
| 3 | 3 | 4 | 5 | 6 | 7 | 8 | 9 | 10 | 11 | 12 | 1 | 2 |
| 4 | 4 | 5 | 6 | 7 | 8 | 9 | 10 | 11 | 12 | 1 | 2 | 3 |
| 5 | 5 | 6 | 7 | 8 | 9 | 10 | 11 | 12 | 1 | 2 | 3 | 4 |
| 6 | 6 | 7 | 8 | 9 | 10 | 11 | 12 | 1 | 2 | 3 | 4 | 5 |
| 7 | 7 | 8 | 9 | 10 | 11 | 12 | 1 | 2 | 3 | 4 | 5 | 6 |
| 8 | 8 | 9 | 10 | 11 | 12 | 1 | 2 | 3 | 4 | 5 | 6 | 7 |
| 9 | 9 | 10 | 11 | 12 | 1 | 2 | 3 | 4 | 5 | 6 | 7 | 8 |
| 10 | 10 | 11 | 12 | 1 | 2 | 3 | 4 | 5 | 6 | 7 | 8 | 9 |
| 11 | 11 | 12 | 1 | 2 | 3 | 4 | 5 | 6 | 7 | 8 | 9 | 10 |
| 12 | 12 | 1 | 2 | 3 | 4 | 5 | 6 | 7 | 8 | 9 | 10 | 11 |

# Fig. 3

**Pi 1 | Po 12 — Vendor#1 | #oP 12 — Intra**

| Pi | B# | Po | --> | P1 | Po |
|----|----|----|----|----|----|
| 1 | 1 | 1 | --> | 12 | 12 |
| 1 | 2 | 2 | --> | 11 | 12 |
| 1 | 3 | 3 | --> | 10 | 12 |
| 1 | 4 | 4 | --> | 9 | 12 |
| 1 | 5 | 5 | --> | 8 | 12 |
| 1 | 6 | 6 | --> | 7 | 12 |
| 1 | 7 | 7 | --> | 6 | 12 |
| 1 | 8 | 8 | --> | 5 | 12 |
| 1 | 9 | 9 | --> | 4 | 12 |
| 1 | 10 | 10 | --> | 3 | 12 |
| 1 | 11 | 11 | --> | 2 | 12 |
| 1 | 12 | 12 | --> | 1 | 12 |

**Pi 2 | Po 11 — Vendor#2 — Intra**

| Pi | B# | Po | --> | P1 | Po |
|----|----|----|----|----|----|
| 2 | 1 | 2 | --> | 11 | 11 |
| 2 | 2 | 3 | --> | 10 | 11 |
| 2 | 3 | 4 | --> | 9 | 11 |
| 2 | 4 | 5 | --> | 8 | 11 |
| 2 | 5 | 6 | --> | 7 | 11 |
| 2 | 6 | 7 | --> | 6 | 11 |
| 2 | 7 | 8 | --> | 5 | 11 |
| 2 | 8 | 9 | --> | 4 | 11 |
| 2 | 9 | 10 | --> | 3 | 11 |
| 2 | 10 | 11 | --> | 2 | 11 |
| 2 | 11 | 12 | --> | 1 | 11 |
| 2 | 12 | 1 | --> | 12 | 11 |

**Pi 3 | Po 10 — Vendor#3 — Intra**

| Pi | B# | Po | --> | P1 | Po |
|----|----|----|----|----|----|
| 3 | 1 | 3 | --> | 10 | 10 |
| 3 | 2 | 4 | --> | 9 | 10 |
| 3 | 3 | 5 | --> | 8 | 10 |
| 3 | 4 | 6 | --> | 7 | 10 |
| 3 | 5 | 7 | --> | 6 | 10 |
| 3 | 6 | 8 | --> | 5 | 10 |
| 3 | 7 | 9 | --> | 4 | 10 |
| 3 | 8 | 10 | --> | 3 | 10 |
| 3 | 9 | 11 | --> | 2 | 10 |
| 3 | 10 | 12 | --> | 1 | 10 |
| 3 | 11 | 1 | --> | 12 | 10 |
| 3 | 12 | 2 | --> | 11 | 10 |

**Pi 4 | Po 9 — Vendor#4 — Intra**

| Pi | B# | Po | --> | P1 | Po |
|----|----|----|----|----|----|
| 4 | 1 | 4 | --> | 9 | 9 |
| 4 | 2 | 5 | --> | 8 | 9 |
| 4 | 3 | 6 | --> | 7 | 9 |
| 4 | 4 | 7 | --> | 6 | 9 |
| 4 | 5 | 8 | --> | 5 | 9 |
| 4 | 6 | 9 | --> | 4 | 9 |
| 4 | 7 | 10 | --> | 3 | 9 |
| 4 | 8 | 11 | --> | 2 | 9 |
| 4 | 9 | 12 | --> | 1 | 9 |
| 4 | 10 | 1 | --> | 12 | 9 |
| 4 | 11 | 2 | --> | 11 | 9 |
| 4 | 12 | 3 | --> | 10 | 9 |

**Pi 5 | Po 8 — Vendor#5 — Intra**

| Pi | B# | Po | --> | P1 | Po |
|----|----|----|----|----|----|
| 5 | 1 | 5 | --> | 8 | 8 |
| 5 | 2 | 6 | --> | 7 | 8 |
| 5 | 3 | 7 | --> | 6 | 8 |
| 5 | 4 | 8 | --> | 5 | 8 |
| 5 | 5 | 9 | --> | 4 | 8 |
| 5 | 6 | 10 | --> | 3 | 8 |
| 5 | 7 | 11 | --> | 2 | 8 |
| 5 | 8 | 12 | --> | 1 | 8 |
| 5 | 9 | 1 | --> | 12 | 8 |
| 5 | 10 | 2 | --> | 11 | 8 |
| 5 | 11 | 3 | --> | 10 | 8 |
| 5 | 12 | 4 | --> | 9 | 8 |

**Pi 6 | Po 7 — Vendor#6 — Intra**

| Pi | B# | Po | --> | P1 | Po |
|----|----|----|----|----|----|
| 6 | 1 | 6 | --> | 7 | 7 |
| 6 | 2 | 7 | --> | 6 | 7 |
| 6 | 3 | 8 | --> | 5 | 7 |
| 6 | 4 | 9 | --> | 4 | 7 |
| 6 | 5 | 10 | --> | 3 | 7 |
| 6 | 6 | 11 | --> | 2 | 7 |
| 6 | 7 | 12 | --> | 1 | 7 |
| 6 | 8 | 1 | --> | 12 | 7 |
| 6 | 9 | 2 | --> | 11 | 7 |
| 6 | 10 | 3 | --> | 10 | 7 |
| 6 | 11 | 4 | --> | 9 | 7 |
| 6 | 12 | 5 | --> | 8 | 7 |

**Pi 7 | Po 6 — Vendor#7 — Intra**

| Pi | B# | Po | --> | P1 | Po |
|----|----|----|----|----|----|
| 7 | 1 | 7 | --> | 6 | 6 |
| 7 | 2 | 8 | --> | 5 | 6 |
| 7 | 3 | 9 | --> | 4 | 6 |
| 7 | 4 | 10 | --> | 3 | 6 |
| 7 | 5 | 11 | --> | 2 | 6 |
| 7 | 6 | 12 | --> | 1 | 6 |
| 7 | 7 | 1 | --> | 12 | 6 |
| 7 | 8 | 2 | --> | 11 | 6 |
| 7 | 9 | 3 | --> | 10 | 6 |
| 7 | 10 | 4 | --> | 9 | 6 |
| 7 | 11 | 5 | --> | 8 | 6 |
| 7 | 12 | 6 | --> | 7 | 6 |

**Pi 8 | Po 5 — Vendor#8 — Intra**

| Pi | B# | Po | --> | P1 | Po |
|----|----|----|----|----|----|
| 8 | 1 | 8 | --> | 5 | 5 |
| 8 | 2 | 9 | --> | 4 | 5 |
| 8 | 3 | 10 | --> | 3 | 5 |
| 8 | 4 | 11 | --> | 2 | 5 |
| 8 | 5 | 12 | --> | 1 | 5 |
| 8 | 6 | 1 | --> | 12 | 5 |
| 8 | 7 | 2 | --> | 11 | 5 |
| 8 | 8 | 3 | --> | 10 | 5 |
| 8 | 9 | 4 | --> | 9 | 5 |
| 8 | 10 | 5 | --> | 8 | 5 |
| 8 | 11 | 6 | --> | 7 | 5 |
| 8 | 12 | 7 | --> | 6 | 5 |

**Pi 9 | Po 4 — Vendor#9 — Intra**

| Pi | B# | Po | --> | P1 | Po |
|----|----|----|----|----|----|
| 9 | 1 | 9 | --> | 4 | 4 |
| 9 | 2 | 10 | --> | 3 | 4 |
| 9 | 3 | 11 | --> | 2 | 4 |
| 9 | 4 | 12 | --> | 1 | 4 |
| 9 | 5 | 1 | --> | 12 | 4 |
| 9 | 6 | 2 | --> | 11 | 4 |
| 9 | 7 | 3 | --> | 10 | 4 |
| 9 | 8 | 4 | --> | 9 | 4 |
| 9 | 9 | 5 | --> | 8 | 4 |
| 9 | 10 | 6 | --> | 7 | 4 |
| 9 | 11 | 7 | --> | 6 | 4 |
| 9 | 12 | 8 | --> | 5 | 4 |

**Pi 10 | Po 3 — Vendor#10 — Intra**

| Pi | B# | Po | --> | P1 | Po |
|----|----|----|----|----|----|
| 10 | 1 | 10 | --> | 3 | 3 |
| 10 | 2 | 11 | --> | 2 | 3 |
| 10 | 3 | 12 | --> | 1 | 3 |
| 10 | 4 | 1 | --> | 12 | 3 |
| 10 | 5 | 2 | --> | 11 | 3 |
| 10 | 6 | 3 | --> | 10 | 3 |
| 10 | 7 | 4 | --> | 9 | 3 |
| 10 | 8 | 5 | --> | 8 | 3 |
| 10 | 9 | 6 | --> | 7 | 3 |
| 10 | 10 | 7 | --> | 6 | 3 |
| 10 | 11 | 8 | --> | 5 | 3 |
| 10 | 12 | 9 | --> | 4 | 3 |

**Pi 11 | Po 2 — Vendor#11 — Intra**

| Pi | B# | Po | --> | P1 | Po |
|----|----|----|----|----|----|
| 11 | 1 | 11 | --> | 2 | 2 |
| 11 | 2 | 12 | --> | 1 | 2 |
| 11 | 3 | 1 | --> | 12 | 2 |
| 11 | 4 | 2 | --> | 11 | 2 |
| 11 | 5 | 3 | --> | 10 | 2 |
| 11 | 6 | 4 | --> | 9 | 2 |
| 11 | 7 | 5 | --> | 8 | 2 |
| 11 | 8 | 6 | --> | 7 | 2 |
| 11 | 9 | 7 | --> | 6 | 2 |
| 11 | 10 | 8 | --> | 5 | 2 |
| 11 | 11 | 9 | --> | 4 | 2 |
| 11 | 12 | 10 | --> | 3 | 2 |

**Pi 12 | Po 1 — Vendor#12 — Intra**

| Pi | B# | Po | --> | P1 | Po |
|----|----|----|----|----|----|
| 12 | 1 | 12 | --> | 1 | 1 |
| 12 | 2 | 1 | --> | 12 | 1 |
| 12 | 3 | 2 | --> | 11 | 1 |
| 12 | 4 | 3 | --> | 10 | 1 |
| 12 | 5 | 4 | --> | 9 | 1 |
| 12 | 6 | 5 | --> | 8 | 1 |
| 12 | 7 | 6 | --> | 7 | 1 |
| 12 | 8 | 7 | --> | 6 | 1 |
| 12 | 9 | 8 | --> | 5 | 1 |
| 12 | 10 | 9 | --> | 4 | 1 |
| 12 | 11 | 10 | --> | 3 | 1 |
| 12 | 12 | 11 | --> | 2 | 1 |

# Fig. 4

**Fig. 5**

| Pi | 1 | V#1 | | #oP | 12 | Pi | 7 | V#2 | | | |
|----|----|-----|------|------|------|------|------|------|------|------|------|
| Po | 1 | | Intra | | | Po | 7 | | Intra | | |
| | Pi | B# | Po | --> | P1 | Po | | Pi | B# | Po | --> | P1 | Po |

| | Pi | B# | Po | --> | P1 | Po | | Pi | B# | Po | --> | P1 | Po |
|---|----|----|----|-----|-----|-----|---|----|----|----|-----|-----|-----|
| | 1 | 1 | 1 | --> | 1 | 1 | | 7 | 1 | 7 | --> | 7 | 7 |
| | 1 | 2 | 2 | --> | 12 | 1 | | 7 | 2 | 8 | --> | 6 | 7 |
| | 1 | 3 | 3 | --> | 11 | 1 | | 7 | 3 | 9 | --> | 5 | 7 |
| | 1 | 4 | 4 | --> | 10 | 1 | | 7 | 4 | 10 | --> | 4 | 7 |
| | 1 | 5 | 5 | --> | 9 | 1 | | 7 | 5 | 11 | --> | 3 | 7 |
| | 1 | 6 | 6 | --> | 8 | 1 | | 7 | 6 | 12 | --> | 2 | 7 |
| | 1 | 7 | 7 | --> | 7 | 1 | | 7 | 7 | 1 | --> | 1 | 7 |
| | 1 | 8 | 8 | --> | 6 | 1 | | 7 | 8 | 2 | --> | 12 | 7 |
| | 1 | 9 | 9 | --> | 5 | 1 | | 7 | 9 | 3 | --> | 11 | 7 |
| | 1 | 10 | 10 | --> | 4 | 1 | | 7 | 10 | 4 | --> | 10 | 7 |
| | 1 | 11 | 11 | --> | 3 | 1 | | 7 | 11 | 5 | --> | 9 | 7 |
| | 1 | 12 | 12 | --> | 2 | 1 | | 7 | 12 | 6 | --> | 8 | 7 |

# Fig. 6

**Fig. 7**

**Fig. 8**

**Fig. 9**

**Fig. 10**

**Fig. 11**

**Fig. 12**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013164044 A

- EP 1324523 A

**In der Beschreibung aufgeführte Nicht-Patentliteratur**

- **HIROMU TUBA et al.** An Optical FDM-Based Self-Healing Ring Network Employing Arrayed Waveguide Grating Filters and EDFA's with Level Equalizers. *IEEE Journal on Selected Areas in Communications,* 01. Juni 1996, vol. 14 (5

- **HILL A. M. et al.** A Scalable and Switchless Optical Network Structure, Employing a Single 32x32 Free-Space Grating Multiplexer. *IEEE Photonics Technology Letters,* April 1996, vol. 8 (4), 569-571